# EUROPÄISCHE PATENTANMELDUNG

(11) **EP 3 101 611 A1**
(43) Veröffentlichungstag der Anmeldung: **07.12.2016**
(21) Anmeldenummer: 15001685.5
(22) Anmeldetag: 06.06.2015
(51) Int. Cl.: G06Q 30/02, G06K 9/00

(54) **VERFAHREN UND VORRICHTUNG ZUM AUSGEBEN EINER INFORMATION AUF EINEM AUSGABEMITTEL**

(71) Anmelder: Leppig, Joachim, 97421 Schweinfurt (DE)
(72) Erfinder: Leppig, Joachim, 97421 Schweinfurt (DE)
(74) Vertreter: Gosdin, Michael

(57) **Zusammenfassung**

Die Erfindung betrifft ein Verfahren zum Ausgeben einer Information (I) auf einem Ausgabemittel (1). Um für Kunden einen besseren Überblick über verfügbare Produkte zu ermöglichen, umfasst das Verfahren die Schritte: a) Erfassen eines Produktions- und/oder Verkaufsprozesses oder Produktions-und/oder Verkaufsstatus und/oder eines Kundenaufkommens mittels einer Steuerungseinrichtung (2); b) Vergleichen eines erfassten Produktions-und/oder Verkaufsstatus und/oder Kundenaufkommens mit einem in einer Speichereinrichtung (3) gespeicherten Status oder Ereignis mittels der Steuerungseinrichtung (2); c) Abrufen einer in der Speichereinrichtung (3) gespeicherten Information (I) durch die Steuerungseinrichtung (2), wenn der erfasste Produktions- und/oder Verkaufsstatus und/oder das Kundenaufkommen mit dem gespeicherten Status oder Ereignis übereinstimmt und Ausgeben der Information (I) auf dem Ausgabemittel (1) mittels der Steuerungseinrichtung (2). Des weiteren betrifft die Erfindung eine Vorrichtung zur Durchführung des Verfahrens.

## Beschreibung

Die Erfindung betrifft ein Verfahren zum Ausgeben einer Information, insbesondere einer Werbeinformation, auf einem Ausgabemittel, insbesondere in Form eines Werbe-Bildschirms und/oder eines Werbe-Lautsprechers im Lebensmitteleinzelhandel. Des weiteren betrifft die Erfindung eine Vorrichtung zur Durchführung des Verfahrens.

In vielen Verkaufsgeschäften ist es üblich, auf Sonderangebote und auch in sonstiger Weise durch elektronische Anzeigetafeln auf spezielle Angebote hinzuweisen und in sonstiger Weise zu werben. Dabei kommen auch Bildschirme zum Einsatz, die gemäß einem vorgegebenen Programm zyklisch mit verschiedener Werbung beschaltet werden.

Nachteilig ist es hierbei, dass die Werbung unabhängig von aktuellen Ereignissen stattfindet bzw. von solchen Ereignissen entkoppelt ist. Insbesondere ist es bislang nicht möglich bzw. üblich, spezielle Ereignisse in der Produktion bzw. im Verkauf zu nutzen, um gezielt auf frische Produkte hinzuweisen bzw. eine hierauf abgestellte spezielle Werbung durchzuführen.

Der Erfindung liegt die **Aufgabe** zugrunde, einem Kunden einen besseren Überblick über verfügbare Produkte zu ermöglichen und in Abhängigkeit von konkret verfügbaren Produkten bzw. Anlässen die Werbung zu optimieren.

Die **Lösung** dieser Aufgabe durch die Erfindung ist verfahrensgemäß dadurch gekennzeichnet, dass die Ausgabe einer Information auf einem Ausgabemittel die folgenden Schritte umfasst:
a) Erfassen eines Produktions- und/oder Verkaufsprozesses oder Produktions- und/oder Verkaufsstatus und/oder eines Kundenaufkommens mittels einer Steuerungseinrichtung;
b) Vergleichen eines erfassten Produktions- und/oder Verkaufsstatus und/oder Kundenaufkommens mit einem in einer Speichereinrichtung gespeicherten Status oder Ereignis mittels der Steuerungseinrichtung;
c) Abrufen einer in der Speichereinrichtung gespeicherten Information, insbesondere Werbeinformation, durch die Steuerungseinrichtung, wenn der erfasste Produktions- und/oder Verkaufsstatus und/oder das Kundenaufkommen mit dem gespeicherten Status oder Ereignis übereinstimmt und Ausgeben der Information, insbesondere der Werbeinformation, auf dem Ausgabemittel mittels der Steuerungseinrichtung.

Als Ausgabemittel kommt bevorzugt ein graphisches Darstellmittel, insbesondere ein Bildschirm, zum Einsatz. Es ist gleichermaßen aber auch möglich, dass als Ausgabemittel ein akustisches Ausgabegerät, insbesondere ein Lautsprecher, verwendet wird.

Bei der Durchführung des obigen Schritts a) kann bevorzugt ein Status in einem Backofen, insbesondere das Backende des Backofens, erfasst werden.

Es ist gemäß einer anderen Ausgestaltung des Verfahrens aber auch möglich, dass bei der Durchführung des Schritts a) ein verkauftes Volumen eines definierten Produkts erfasst wird. In letzterem Falle wird gemäß einer bevorzugten Ausgestaltung des Verfahrens vorgesehen, dass das verkaufte Volumen des definierten Produkts über eine Registrierkasse erfasst wird.

Weiterhin kann vorgesehen werden, dass bei der Durchführung des obigen Schritts a) ein Kundenaufkommen, insbesondere an einer definierten Stelle eines Verkaufsraums, erfasst wird. Dabei wird das Kundenaufkommen vorzugsweise mittels einer Kamera erfasst. Unter Kundenaufkommen ist insbesondere auch zu verstehen, dass die Art der Kundschaft (männlich, weiblich, Altersgruppe, usw.) erfasst bzw. identifiziert wird.

Die Vorrichtung zur Durchführung des Verfahrens umfasst erfindungsgemäß:
- ein Ausgabemittel zum Ausgeben einer Information, insbesondere einer Werbeinformation,
- eine Produktionsanlage und/oder eine Verkaufsanlage und/oder eine Erfassungsanlage für Kundenaufkommen,
- eine Steuerungseinrichtung, die mit dem Ausgabemittel und der Produktionsanlage und/oder mit der Verkaufsanlage und/oder mit der Erfassungsanlage sowie mit einer Speichereinrichtung in Verbindung steht,
wobei die Steuerungseinrichtung ausgebildet ist, einen Produktionsstatus in der Produktionsanlage und/oder einen Verkaufsstatus in der Verkaufsanlage und/oder ein Kundenaufkommen zu erfassen, diesen bzw. dieses mit einem in der Speichereinrichtung gespeicherten Status oder einem Ereignis zu vergleichen, eine Information, insbesondere eine Werbeinformation, aus der Speichereinrichtung abzurufen und diese Information, insbesondere Werbeinformation, am Ausgabemittel auszugeben.

Das Ausgabemittel ist dabei bevorzugt ein Bildschirm, insbesondere ein Werbebildschirm, oder ein Lautsprecher, insbesondere ein Werbelautsprecher.

Die Produktionsanlage ist bevorzugt ein Backofen bzw. sie umfasst einen solchen.

Die Verkaufsanlage ist bevorzugt eine Registrierkasse oder sie umfasst eine solche.

Mit der vorgeschlagenen Verfahrensweise wird es möglich, in der Werbung bzw. Kundeninformation auf spezielle Ereignisse, einschließlich des Kundenaufkommens, Bezug zu nehmen und diese im Warenangebot bzw. in der Werbung zu nutzen. Spezielle Ereignisse können also als automatischer Auslöser für Werbe- bzw. Informationsmaßnahmen genutzt werden. Die Werbung wird hiermit zielgerichteter und effizienter. Die Kunden können damit einen verbesserten Überblick über das konkret verfügbare Warenangebot erhalten.

Die vorgeschlagene Verfahrensweise kommt bevorzugt im Lebensmitteleinzelhandel zum Einsatz. Ein besonders bevorzugter Einsatzfall ist der in Bäckereien.

Die oben genannten Maßnahmen können jeweils für sich oder auch in beliebiger Kombination umgesetzt werden.

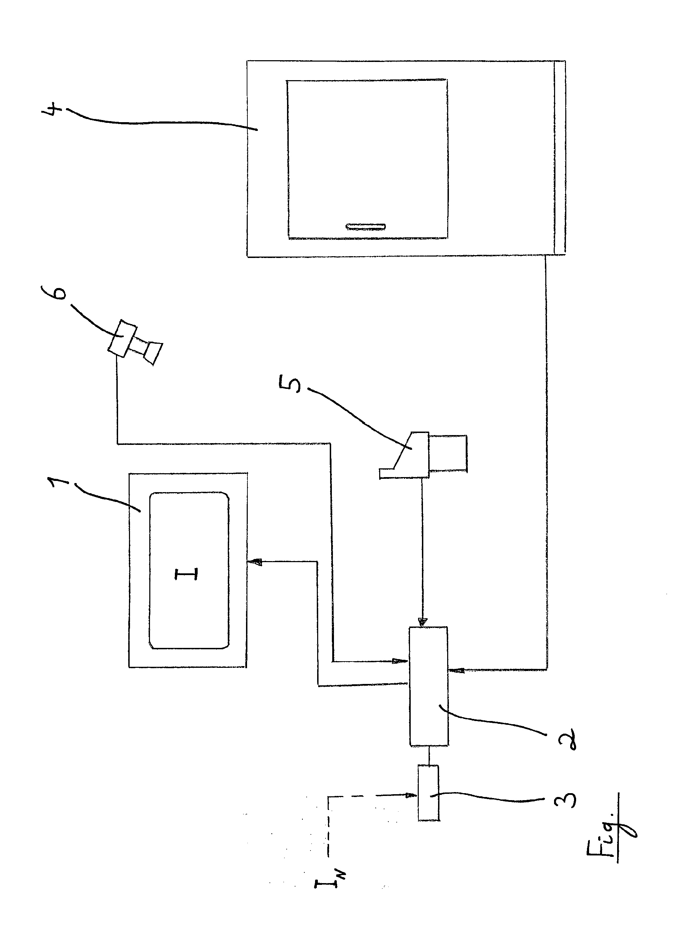

In der Figur ist ein Ausführungsbeispiel der Erfindung dargestellt. Die Figur zeigt einige Elemente einer Bäckerei.

In der Figur ist eine Bäckerei (Bäckereifiliale oder Backshop im Lebensmitteleinzelhandel) skizziert, die als hier interessierende Komponenten eine Produktionsanlage 4 in Form eines Backofens aufweist und eine Verkaufsanlage 5 in Form einer Registrierkasse. Ferner ist ein Ausgabemittel 1 für Informationen vorhanden, und zwar in Form eines Bildschirms, auf dem Werbung angezeigt werden kann. Die auf dem Bildschirm 1 angezeigte Information ist mit I markiert.

Der Bildschirm 1, der Backofen 4 und die Registrierkasse 5 sind über eine Kommunikationsleitung miteinander verbunden; das Zentrum der gesamten Anlage ist eine Steuerungseinrichtung 2, die wiederum mit einer Speichereinrichtung 3 verbunden ist. Natürlich können verschiedene der genannten Komponenten auch in einem gemeinsamen Gehäuse integral zusammenfasst sein.

Die dargestellte Anlage erlaubt es, in Abhängigkeit eines Ereignisses bzw. eines Status (z. B. eine Preisänderung) die Werbung am Bildschirm 1 zu optimieren bzw. zu beeinflussen.

Beispielsweise besteht die Möglichkeit, dass der Betrieb des Backofens 4 von der Steuerungseinrichtung 2 mit Blick auf den Backzyklus überwacht wird.

Kommt beispielsweise das Backprogramm beim Backen von Croissants zum Ende, kann eine in der Speichereinrichtung 3 gespeicherte Information (z. B. "frische Croissants") abgerufen und am Bildschirm 1 angezeigt werden.

Eine andere Möglichkeit besteht darin, dass spezielle Werbeaktionen vom dargestellten System automatisch durchgeführt bzw. unterstützt werden. Beispielsweise kann anhand der Anzahl der verkauften Cappuccinos - überwacht anhand der Registrierkasse 5 - eine Aktion unterstützt bzw. gesteuert werden, die spezielle Boni auslobt (z. B. "jeder 100. Cappuccino kostenlos").

Nachdem eine entsprechende Anzahl an Cappuccinos verkauft wurde (überwacht durch die Registrierkasse 5), kann eine entsprechende Information am Bildschirm 1 angezeigt werden ("Glückwunsch zu einem kostenlosen Cappuccino").

In der Figur ist auch noch angedeutet, dass neue Informationen IN (z. B. Preisänderungen) über eine Datenleitung von außen in das System und namentlich in die Speichereinrichtung 3 eingesteuert werden können.

So können beispielsweise spezielle Kampagnen, die in gleicher Weise in einer Anzahl an Filialen durchgeführt werden sollen, über eine entsprechende Eingabe in die Speichereinrichtung 3 gefahren werden.

Natürlich können die relevanten Informationen nicht nur optisch am Bildschirm angezeigt werden, sondern auch akustisch über Lautsprecher ausgegeben werden.

So können aktuelle Ereignisse, die in der Bäckerei stattfinden, gezielt zu Werbemaßnahmen herangezogen werden und diese auslösen.

Dies gilt auch mit Blick auf das Kundenaufkommen, das anhand einer Kamera 6 bestimmt werden kann.

So kann beispielsweise vorgesehen werden, dass dann, wenn die Kamera 6 eine Person an einer bestimmten Stelle des Verkaufsraums detektiert, eine Informationssequenz (z. B. ein Videoclip) aus der Speichereinrichtung 3 abgerufen an einem hier angeordneten Bildschirm 1 angezeigt wird.

Die Werbung kann insofern individualisiert und gezielt eingesetzt werden.

### Bezugszeichenliste:

- 1: Ausgabemittel (Bildschirm, Lautsprecher)
- 2: Steuerungseinrichtung
- 3: Speichereinrichtung
- 4: Produktionsanlage (Backofen)
- 5: Verkaufsanlage (Registrierkasse)
- 6: Kamera

- I: Information
- I_{N}: neue Information

## Patentansprüche

1. Verfahren zum Ausgeben einer Information (I) auf einem Ausgabemittel (1), umfassend die Schritte:
a) Erfassen eines Produktions- und/oder Verkaufsprozesses oder Produktions- und/oder Verkaufsstatus und/oder eines Kundenaufkommens mittels einer Steuerungseinrichtung (2);
b) Vergleichen eines erfassten Produktions- und/oder Verkaufsstatus und/oder Kundenaufkommens mit einem in einer Speichereinrichtung (3) gespeicherten Status oder Ereignis mittels der Steuerungseinrichtung (2);
c) Abrufen einer in der Speichereinrichtung (3) gespeicherten Information (I) durch die Steuerungseinrichtung (2), wenn der erfasste Produktions- und/oder Verkaufsstatus und/oder das Kundenaufkommen mit dem gespeicherten Status oder Ereignis übereinstimmt und Ausgeben der Information (I) auf dem Ausgabemittel (1) mittels der Steuerungseinrichtung (2).

2. Verfahren nach Anspruch 1, **dadurch gekennzeichnet, dass** als Ausgabemittel (1) ein graphisches Darstellmittel, insbesondere ein Bildschirm, und/oder ein akustisches Ausgabegerät, insbesondere ein Lautsprecher, verwendet wird.

3. Verfahren nach Anspruch 1 oder 2, **dadurch gekennzeichnet, dass** bei der Durchführung von Schritt a) gemäß Anspruch 1 ein Status in einem Backofen (4), insbesondere das Backende des Backofens, erfasst wird.

4. Verfahren nach Anspruch 1 oder 2, **dadurch gekennzeichnet, dass** bei der Durchführung von Schritt a) gemäß Anspruch 1 ein verkauftes Volumen eines definierten Produkts erfasst wird.

5. Verfahren nach Anspruch 4, **dadurch gekennzeichnet, dass** das verkaufte Volumen des definierten Produkts über eine Registrierkasse (5) erfasst wird.

6. Verfahren nach Anspruch 1 oder 2, **dadurch gekennzeichnet, dass** bei der Durchführung von Schritt a) gemäß Anspruch 1 ein Kundenaufkommen, insbesondere an einer definierten Stelle eines Verkaufsraums, erfasst wird, wobei das Kundenaufkommen insbesondere mittels einer Kamera (6) erfasst wird.

7. Vorrichtung zur Durchführung des Verfahrens nach einem der Ansprüche 1 bis 6, umfassend
- ein Ausgabemittel (1) zum Ausgeben einer Information (I),
- eine Produktionsanlage (4) und/oder eine Verkaufsanlage (5) und/oder eine Erfassungsanlage (6) für Kundenaufkommen,
- eine Steuerungseinrichtung (2), die mit dem Ausgabemittel (1) und der Produktionsanlage (4) und/oder mit der Verkaufsanlage (5) und/oder mit der Erfassungsanlage (6) sowie mit einer Speichereinrichtung (3) in Verbindung steht,
wobei die Steuerungseinrichtung (2) ausgebildet ist, einen Produktionsstatus in der Produktionsanlage (4) und/oder einen Verkaufsstatus in der Verkaufsanlage (4) und/oder ein Kundenaufkommen zu erfassen, diesen bzw. dieses mit einem in der Speichereinrichtung (4) gespeicherten Status oder einem Ereignis zu vergleichen, eine Information (I) aus der Speichereinrichtung (4) abzurufen und diese Information (I) am Ausgabemittel (1) auszugeben.

8. Vorrichtung nach Anspruch 7, **dadurch gekennzeichnet, dass** das Ausgabemittel (1) ein Bildschirm oder ein Lautsprecher ist.

9. Vorrichtung nach Anspruch 7 oder 8, **dadurch gekennzeichnet, dass** die Produktionsanlage (4) ein Backofen ist oder einen solchen umfasst.

10. Vorrichtung nach einem der Ansprüche 7 bis 9, **dadurch gekennzeichnet, dass** die Verkaufsanlage (5) eine Registrierkasse ist oder eine solche umfasst.
